# EUROPÄISCHE PATENTANMELDUNG

(11) **EP 3 620 485 A1**
(43) Veröffentlichungstag der Anmeldung: **11.03.2020**
(21) Anmeldenummer: 18192339.2
(22) Anmeldetag: 04.09.2018
(51) Int. Cl.: C08K 5/521, C08K 7/06, C08K 7/14, C08L 69/00

(54) **VERFAHREN ZUR HERSTELLUNG EINER FORMMASSE MIT VERBESSERTEN EIGENSCHAFTEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Gegenstand der vorliegenden Erfindung ist ein Verfahren zur Herstellung einer Formmasse mit verbesserten Eigenschaften. Insbesondere Gegenstand der vorliegenden Erfindung ist die Herstellung einer Formmasse enthaltend ein Polycarbonat und einen Verstärkungsfüllstoff. Erfindungsgemäß ist diese Formmasse dadurch erhältlich, dass ein Polycarbonat und der Verstärkungsfüllstoff mittels eines Mehrwellenextruders mit zueinander ringförmig angeordneten Schneckenwellen compoundiert werden. Der Verstärkungsfüllstoff ist dabei bevorzugt ausgewählt aus ein oder mehreren Mitgliedern der Gruppe umfassend die Mitglieder Titandioxid (TiO₂), Talkum (Mg₃Si₄O₁₀(OH)₂), Dolomit (CaMg[CO₃]₂), Kaolinit (Al₄[(OH)₈|S₁₄O₁₀]) und Wollastonit (Ca₃[Si₃O₉]), bevorzugt ausgewählt aus ein oder mehreren Mitgliedern der Gruppe umfassend die Mitglieder Titandioxid (TiO2) und Talkum (Mg₃Si₄O₁₀(OH)₂). Erfindungsgemäß beträgt dabei der Gehalt an Verstärkungsfüllstoff 3 bis 50 Gew.-%, jeweils bezogen auf die Gesamtmasse der Formmasse.

## Beschreibung

Gegenstand der vorliegenden Erfindung ist ein Verfahren zur Herstellung einer Formmasse mit verbesserten Eigenschaften. Insbesondere Gegenstand der vorliegenden Erfindung ist die Herstellung einer Formmasse enthaltend ein Polycarbonat und einen Verstärkungsfüllstoff.

Erfindungsgemäß ist diese Formmasse dadurch erhältlich, dass ein Polycarbonat und der Verstärkungsfüllstoff mittels eines Mehrwellenextruders mit zueinander ringförmig angeordneten Schneckenwellen compoundiert werden.

Der Verstärkungsfüllstoff ist dabei bevorzugt ausgewählt aus ein oder mehreren Mitgliedern der Gruppe umfassend die Mitglieder Titandioxid (TiO₂), Talkum (Mg₃Si₄O₁₀(OH)₂), Dolomit (CaMg[CO₃]₂), Kaolinit (Al₄[(OH)₈|Si₄O₁₀]) und Wollastonit (Ca₃[Si₃O₉]), besonders bevorzugt ausgewählt aus ein oder mehreren Mitgliedern der Gruppe umfassend die Mitglieder Titandioxid (TiO₂) und Talkum (Mg₃Si₄O₁₀(OH)₂).

Erfindungsgemäß beträgt dabei der Gehalt an Verstärkungsfüllstoff 3 bis 50 Gew.-%, jeweils bezogen auf die Gesamtmasse der Formmasse.

Bevorzugt beträgt der Gehalt an Verstärkerfüllstoff 10 bis 35 Gew.-%, besonders bevorzugt 12 bis 32 Gew.-%, ganz besonders bevorzugt 15 bis 30 Gew.-%, jeweils bezogen auf die Gesamtmasse der Formmasse. Insbesondere gelten diese Werte für Titandioxid (TiO₂) als Verstärkerfüllstoff, jedoch auch für andere Verstärkerfüllstoff wie Talkum (Mg₃Si₄O₁₀(OH)₂), Dolomit CaMg[CO₃]₂, Kaolinit Al₄[(OH)₈|Si₄O₁₀] und Wollastonit Ca₃[Si₃O₉] sind diese Werte gültig.

Alternativ bevorzugt beträgt der Gehalt an Verstärkungsfüllstoff 15 bis 45 Gew.-%, besonders bevorzugt 25 bis 40 Gew.-%, ganz besonders bevorzugt 30 bis 35 Gew.-%, jeweils bezogen auf die Gesamtmasse der Formmasse. Insbesondere gelten diese Werte für Talkum (Mg₃Si₄O₁₀(OH)₂) als Verstärkerfüllstoff, jedoch auch für andere Verstärkerfüllstoff wie Titandioxid (TiO₂), Dolomit (CaMg[CO₃]₂), Kaolinit (Al₄[(OH)₈|Si₄O₁₀]) und Wollastonit (Ca₃[Si₃O₉]) sind diese Werte gültig.

Das erfindungsgemäße Verfahren weist insbesondere folgende Schritte auf:
(1) Zugeben von Polycarbonat, Verstärkungsfüllstoff und gegebenenfalls sonstigen Bestandteilen in einen Mehrwellenextruder mit zueinander ringförmig angeordneten Schneckenwellen;
(2) Compoundieren von Polycarbonat und Verstärkungsfüllstoff und gegebenenfalls sonstigen Bestandteilen mit einem Mehrwellenextruder mit zueinander ringförmig angeordneten Schneckenwellen.

Dabei können Polycarbonat, Verstärkungsfüllstoff und gegebenenfalls sonstige Bestandteilen gleichzeitig oder nacheinander in den Mehrwellenextruder mit zueinander ringförmig angeordneten Schneckenwellen gegeben werden. Insbesondere kann die Zugabe des Verstärkerfüllstoffs entweder vor dem Aufschmelzen des Polycarbonats oder nach dem Aufschmelzen des Polycarbonats erfolgen.

Entsprechend dem Gehalt an Verstärkungsfüllstoff beträgt der Gehalt an Polycarbonat in der erfindungsgemäßen Formmasse 97 bis 55 Gew.-%, jeweils bezogen auf die Gesamtmasse der Formmasse.

Bevorzugt beträgt der Gehalt an Polycarbonat in der erfindungsgemäßen Formmasse 90 bis 65 Gew.-%, besonders bevorzugt 88 bis 68 Gew.-%, ganz besonders bevorzugt 85 bis 70 Gew.-%, jeweils bezogen auf die Gesamtmasse der Formmasse.

Alternativ bevorzugt beträgt der Gehalt an Verstärkungsfüllstoff 15 bis 45 Gew.-%, besonders bevorzugt 25 bis 40 Gew.-%, ganz besonders bevorzugt 30 bis 35 Gew.-%

Alternativ bevorzugt beträgt der Gehalt an Polycarbonat in der erfindungsgemäßen Formmasse 85 bis 55 Gew.-%, besonders bevorzugt 75 bis 60 Gew.-%, ganz besonders bevorzugt 70 bis 65 Gew.-%, jeweils bezogen auf die Gesamtmasse der Formmasse.

Die Formmasse kann außerdem sonstige Bestandteile enthalten. Der Gehalt der sonstigen Bestandteile in der Formmasse enthaltend ein Polycarbonat und einen Verstärkungsfüllstoff beträgt von 0 bis 37 Gew.-%, bevorzugt von 0 bis 20 Gew.-%, besonders bevorzugt 0 bis 10 Gew.-%, jeweils bezogen auf die Gesamtmasse der Formmasse. Dabei beträgt die Summe aller Bestandteile der Formmasse 100 Gew.-%.

Nachfolgend wird eine Formmasse enthaltend ein Polycarbonat auch Polycarbonatformmasse genannt.

Aus dem Stand der Technik, beispielsweise aus [1] ([1] = Klemens Kohlgrüber: Der gleichläufige Doppelschneckenextruder, 2., neu bearbeitete und erweiterte Auflage, Hanser Verlag München 2016, S. 47 ff) ist es bekannt, Polymerformmassen, wie beispielsweise auch eine Formmassen enthaltend ein Polycarbonat eine dieser Polymerformmassen ist, durch Beimischung von Zuschlagstoffen, beispielsweise Füllstoffe, so aufzubereiten, dass diese Polymerformmassen ein gewünschtes Eigenschaftsprofil erreichen. Diese Aufbereitung, auch Compoundierung genannt, wird in aller Regel in einem Doppelschneckenextruder durchgeführt. Dabei ist es insbesondere erwünscht, eine möglichst gute Dispergierung der Füllstoffe in der Polymerformmasse zu erreichen, das heißt, eine möglichst gute Zerkleinerung und Verteilung der Füllstoffe in der Polymerformmasse. Die Compoundierung ist umso schwieriger, je höher der Gehalt der zu dispergierenden Füllstoffe in der Polymerformmasse ist und je besser die Dispergierung, also je besser die Zerkleinerung und Verteilung, der Füllstoffe in der Polymerformmasse sein soll.

Eine verbesserte Dispergierung von Füllstoffen in einer Polymerformmasse bewirkt unter anderem auch, dass die Formmasse verbesserte Eigenschaften, insbesondere verbesserte Oberflächeneigenschaften und verbesserte mechanische Eigenschaften wie z.B. eine höhere Zähigkeit, eine höhere Kraftaufnahme und größere Dehnung beim Durchstoßversuch, aufweist.

Um bei einem gegebenen Doppelschneckenextruder eine verbesserte Dispergierung bei einem möglichst hohen Gehalt an Füllstoffen zu erreichen, muss der Energieeintrag in die Polymerformmasse erhöht werden. Dies hat aber zur Folge, dass die Temperatur der Polymerformmasse während der Compoundierung im Doppelschneckenextruder ansteigt und zwar umso stärker, je höher der Energieeintrag ist. Dies wiederum hat zur Folge, dass die Polymerformmasse thermische Schäden erleiden kann. Diese können wiederum zu einer Vergilbung der Polymerformmasse, zur Entstehung von Stippen, oder anderen unerwünschten Veränderungen der Polymerformmasse führen.

Da diese thermischen Schäden in der Regel vermieden werden sollen, wird auf die verbesserte Dispergierung verzichtet oder der Gehalt an Füllstoff nicht erhöht oder beides. In seltenen Fällen wird aber auch die thermische Schädigung oder eine schlechtere Dispergierung in Kauf genommen oder beides. Auf diese Weisen kann jedoch keine Polymerformmasse erhalten werden, die verbesserte Eigenschaften aufweist. Insbesondere ist es auf diese Weise nicht möglich, gleichzeitig die Oberflächeneigenschaften und die mechanischen Eigenschaften der Polymerformmasse zu verbessern.

Auch hat sich herausgestellt, dass die Anwendung eines Doppelschneckenextruders mit einem größeren Länge-zu-Durchmesser-Verhältnis (L/D-Verhältnis) als bei dem eingangs gegebenen Doppelschneckenextruder dem Problem nicht abhilft, da auch bei einem Doppelschneckenextruder mit größerem L/D-Verhältnis die thermische Belastung der Polymerformmasse unerwünscht hoch wird, wenn die gewünschte verbesserte Dispergierung bei einem gewünschten hohen Gehalt an Füllstoffen erreicht werden soll, da bei einer Vergrößerung des L/D-Verhältnisses eines Doppelschneckenextruders bei ansonsten gleichen Bedingungen die Temperatur der zu extrudierten Polymerformmasse etwa um 10 bis 20 °C pro einer zusätzlichen Länge des Doppelschneckenextruders zunimmt, die dem vierfachen des Außendurchmessers eines Schneckenelements entspricht, das die Innenwand des Doppelschneckenextruders abreinigt. Somit kann auch auf diesem Wege keine Polymerformmasse erhalten werden, die verbesserte Eigenschaften aufweist. Insbesondere ist es auf diese Weise nicht möglich, gleichzeitig die Oberflächeneigenschaften und die mechanischen Eigenschaften der Polymerformmasse zu verbessern.

Das beschriebene Problem stellt sich auch, wenn eine Polycarbonatformmasse mit einem hohen Anteil eines Verstärkungsfüllstoff durch Compoundierung hergestellt werden soll.

Aufgabe der vorliegenden Erfindung ist es daher, ein Verfahren zur Herstellung einer verbesserten Polycarbonatformmasse enthaltend einen Verstärkungsfüllstoff zur Verfügung zu stellen.

Insbesondere soll die erfindungsgemäße Polycarbonatformmasse folgende verbesserte Eigenschaften haben:
(1) verbesserte Oberflächeneigenschaften, insbesondere weniger Störstellen, wiederum insbesondere weniger Störstellen in Form von Erhebungen oder Vertiefungen in der Oberfläche, hervorgerufen durch unvollständig dispergierten Verstärkerfüllstoffpartikel;
(2) und verbesserte mechanische Eigenschaften, insbesondere eine höhere Zähigkeit, eine höhere Kraftaufnahme, eine größere Dehnung, und eine größere Umformung, ganz insbesondere eine höhere Zähigkeit.

Überraschenderweise wurde gefunden, dass die Aufgabe gelöst wird durch ein Verfahren zur Herstellung einer Formmasse enthaltend ein Polycarbonat und einen Verstärkungsfüllstoff, bevorzugt ausgewählt aus ein oder mehreren Mitgliedern der Gruppe umfassend die Mitglieder Titandioxid (TiO₂) Talkum (Mg₃Si₄O₁₀(OH)₂), Dolomit CaMg[CO₃]₂, Kaolinit Al₄[(OH)₈|Si₄O₁₀] und Wollastonit Ca₃[Si₃O₉], bevorzugt ausgewählt aus ein oder mehreren Mitgliedern der Gruppe umfassend die Mitglieder Titandioxid (TiO₂) und Talkum (Mg₃Si₄O₁₀(OH)₂), wobei die Polycarbonatformmasse mittels eines Mehrwellenextruders mit zueinander ringförmig angeordneten Schneckenwellen compoundiert wird. Dabei beträgt der Gehalt an Verstärkungsfüllstoff 3 bis 45 Gew.-%, jeweils bezogen auf die Gesamtmasse der Polycarbonatformmasse.

Bevorzugt beträgt der Gehalt an Verstärkerfüllstoff 10 bis 35 Gew.-%, besonders bevorzugt 12 bis 32 Gew.-%, ganz besonders bevorzugt 15 bis 30 Gew.-%, jeweils bezogen auf die Gesamtmasse der Formmasse. Insbesondere gelten diese Werte für Titandioxid (TiO₂) als Verstärkerfüllstoff, jedoch auch für andere Verstärkerfüllstoff wie Talkum (Mg₃Si₄O₁₀(OH)₂), Dolomit (CaMg[CO₃]₂), Kaolinit (Al₄[(OH)₈|Si₄O₁₀]) und Wollastonit (Ca₃[Si₃O₉]) sind diese Werte gültig.

Alternativ bevorzugt beträgt der Gehalt an Verstärkungsfüllstoff 15 bis 45 Gew.-%, besonders bevorzugt 25 bis 40 Gew.-%, ganz besonders bevorzugt 30 bis 35 Gew.-%, jeweils bezogen auf die Gesamtmasse der Formmasse. Insbesondere gelten diese Werte für Talkum (Mg₃Si₄O₁₀(OH)₂) als Verstärkerfüllstoff, jedoch auch für andere Verstärkerfüllstoff wie Titandioxid (TiO₂), Dolomit (CaMg[CO₃]₂), Kaolinit (Al₄[(OH)₈|Si₄O₁₀]) und Wollastonit (Ca₃[Si₃O₉]) sind diese Werte gültig. Im Sinne der vorliegenden Erfindung wird unter einem Verstärkungsfüllstoff ein mineralischer Füllstoff verstanden, der geeignet ist, die Steifigkeit der erfindungsgemäß hergestellten Polycarbonatformmasse zu erhöhen.

Insbesondere werden mit dem erfindungsgemäßen Verfahren Polycarbonatformmassen erhalten, die folgende verbesserte Eigenschaften haben:
(1) verbesserte Oberflächeneigenschaften, insbesondere weniger Störstellen, wiederum insbesondere weniger Störstellen in Form von Erhebungen oder Vertiefungen in der Oberfläche, hervorgerufen durch unvollständig dispergierten Verstärkerfüllstoffpartikel. Unvollständig dispergierte Verstärkerfüllstoffpartikel können beispielsweise durch ein visuelle Analyse von Bildern von aus der erfindungsgemäßen Formmasse hergestellten Formkörpern ermittelt werden, die Partikelgrößenverteilung der unvollständig dispergierten Verstärkerfüllstoffpartikel kann mittels einer Klassifizierung bewertet werden;
(2) und verbesserte mechanische Eigenschaften, insbesondere eine höhere Zähigkeit, eine höhere Kraftaufnahme, eine größere Dehnung, und eine größere Umformung, ganz insbesondere eine höhere Zähigkeit. Diese mechanischen Eigenschaften können beispielsweise mit einer Durchstoßmessung nach DIN EN ISO 6603-2:2000 bei 23 °C an einem spritzgegossenen Prüfkörper mit den Maßen 60 mm x 60 mm x 2,0 mm ermittelt werden; besonders aussagekräftig ist hier das mathematische Produkt aus maximaler Kraft und maximaler Verformung als Maß für die mechanische Zähigkeit, wobei ein höherer Wert dieses Produkts eine höhere Zähigkeit bedeutet.

Eine solche erfindungsgemäß hergestellte Polycarbonatformmasse weist bessere, also verbesserte, Eigenschaften auf, als Polycarbonatformmassen, die mit Verfahren nach dem Stand der Technik hergestellt wurden, wobei die Polycarbonatformmassen, die nach dem Stand der Technik hergestellt wurden, die gleichen Bestandteile in denselben Anteilen aufweisen, wie die erfindungsgemäß hergestellte Polycarbonatformmasse.

Im Sinne der vorliegenden Erfindung wird unter dem Begriff "Formkörper" ein Gegenstand verstanden, der das Ergebnis einer Weiterverarbeitung der Formmasse ist. So ist beispielsweise sowohl ein aus der Formmasse durch Spritzguss erhältlicher Gegenstand, als auch eine durch Extrusion der Formmasse erhältliche Folie oder Platte als Formkörper anzusehen.

Als Titandioxid (TiO₂) wird bevorzugt die Modifikation Rutil mit einer Korngröße d₅₀ von 0,1 µm bis 5 µm, bevorzugt 0,3 bis 3 µm, eingesetzt. Beispiele für erfindungsgemäß brauchbare Titandioxid sind ausgewählt aus den käuflich zu erwerbenden Erzeugnissen Titandioxid Kronos 2230 und Titandioxid Kronos 2233; Hersteller beider Erzeugnisse ist die Kronos Titan GmbH Leverkusen.

Talkum (Mg₃Si₄O₁₀(OH)₂) wird bevorzugt mit einer Korngröße d₅₀ von 0,1 µm bis 10 µm, bevorzugt 0,3 bis 3 µm, eingesetzt. Beispielsweise können als Talkum die käuflich zu erwerbenden Erzeugnisse Jetfine 3CA der Firma Imerys Talc (Luzenac Europe SAS) oder Talkum HTP Ultra 5C der Firma IMI Fabi S.p.A. verwendet werden.

Die Korngröße dso ist dabei jeweils massebezogen und wurde nach ISO 1333 17-3 mit einem Sedigraph 5100, Fa. Micrometrics, Deutschland, bestimmt.

Mischungen aus Titandioxid und Talkum können in beliebigen Mischungsverhältnissen eingesetzt werden. Bevorzugt beträgt das Mischungsverhältnis von Titandioxid zu Talkum 1 : 60 bis 1:1, bevorzugt 1 : 30 bis 1 : 5, jeweils bezogen auf die Masse.

Die Partikel des jeweiligen Minerals, aus denen der Verstärkungsfüllstoff besteht, weisen bevorzugt ein Aspect-Verhältnis von 1:1 bis 1:7 auf.

Im Sinne der vorliegenden Erfindung werden unter "Polycarbonat" sowohl Homopolycarbonate als auch Copolycarbonate verstanden. Dabei können die Polycarbonate in bekannter Weise linear oder verzweigt sein. Erfindungsgemäß können auch Mischungen von Polycarbonaten verwendet werden.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch bevorzugt aromatische Dicarbonsäureester-Gruppen ersetzt sein. Derartige Polycarbonate, die sowohl Säurereste der Kohlensäure als auch Säurereste von, bevorzugt aromatischen Dicarbonsäuren in die Molekülkette eingebaut enthalten, werden als aromatische Polyestercarbonate bezeichnet.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Die thermoplastischen Polycarbonate einschließlich der thermoplastischen Polyestercarbonate haben mittlere Molekulargewichte Mw bestimmt durch GPC (Gelpermeationschromatographie in Methylenchlorid mit Polycarbonat als Standard) von 15 kg/mol bis 50 kg/mol, bevorzugt von 20 kg/mol bis 35 kg/mol, besonders bevorzugt von 23 kg/mol bis 33 kg /mol.

Die Herstellung der bevorzugten aromatischen Polycarbonate und aromatischen Polyestercarbonate erfolgt in bekannter Weise aus Diphenolen, Kohlensäure oder Kohlensäurederivaten und, im Falle der Polyestercarbonate, bevorzugt aromatischen Dicarbonsäuren oder Dicarbonsäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien, 1992, Seiten 117-299 verwiesen.

Die Herstellung aromatischer Polycarbonate und Polyestercarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten. Ebenso ist eine Herstellung über ein Schmelzepolymerisationsverfahren durch Umsetzung von Diphenolen mit beispielsweise Diphenylcarbonat möglich.

Für die Herstellung von Polycarbonaten geeignete Dihydroxyarylverbindungen sind solche der Formel (1)

HO-Z-OH (1),

in welcher
Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 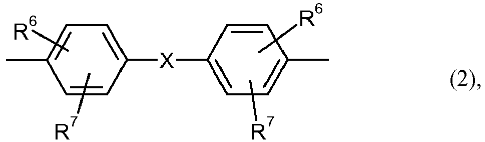 in der
R6 und R7 unabhängig voneinander für H, C1- bis C18-Alkyl-, C1- bis C18-Alkoxy, Halogen wie C1 oder Br oder für jeweils gegebenenfalls substituiertes Aryl- oder Aralkyl, bevorzugt für H oder C1 bis C12 Alkyl, besonders bevorzugt für H oder C1- bis C8-Alkyl und ganz besonders bevorzugt für H oder Methyl stehen, und
X für eine Einfachbindung, -SO2-, -CO-, -O-, -S-, C1- bis C6-Alkylen, C2- bis C5-Alkyliden oder C5- bis C6 Cycloalkyliden, welches mit C1- bis C6-Alkyl, vorzugsweise Methyl oder Ethyl, substituiert sein kann, ferner für C6- bis C12-Arylen, welches gegebenenfalls mit weiteren Heteroatome enthaltenden aromatischen Ringen kondensiert sein kann, steht.

Bevorzugt steht X für eine Einfachbindung, C1- bis C5-Alkylen, C2- bis C5-Alkyliden, C5- bis C6-Cycloalkyliden, -O-, -SO-, -CO-, -S-, -SO2-
oder für einen Rest der Formel (2a)

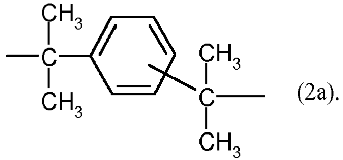

Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine abgeleitet von Isatin- oder Phenolphthaleinderivaten sowie deren kernalkylierte, kernarylierte und kernhalogenierte Verbindungen.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A.

Am stärksten bevorzugt ist 2,2-Bis-(4-hydroxyphenyl)-propan (Bisphenol A).

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP A 105550/1986 beschrieben.

Im Fall der Homopolycarbonate wird nur ein Diphenol eingesetzt, im Fall der Copolycarbonate werden mehrere Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C1- bis C30-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Diphenolen.

Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Am meisten bevorzugt als Polycarbonat ist aromatisches Polycarbonat auf Basis von Bisphenol A.

Der erfindungsgemäßen Polycarbonatformmasse können außer Titandioxid (TiO₂), und/oder Talkum (Mg₃Si₄O₁₀(OH)₂), Dolomit (CaMg[CO₃]₂), Kaolinit (Al₄[(OH)₈|Si₄O₁₀]) und/oder Wollastonit (Ca₃[Si₃O₉]) auch noch sonstige Bestandteile zugesetzt werden.

Der Gehalt der sonstigen Bestandteile in der erfindungsgemäß hergestellten Polycarbonatformmasse beträgt von 0 bis 37 Gew.-%, bevorzugt von 0 bis 20 Gew.-%, besonders bevorzugt 0 bis 10 Gew.-%.

Diese sonstigen Bestandteile sind Bestandteile, die weder Polycarbonat noch Verstärkerfüllstoff sind. Diese sonstigen Bestandteile sind insbesondere Bestandteile, die weder Polycarbonat noch Titandioxid (TiO₂), Talkum (Mg₃Si₄O₁₀(OH)₂), Dolomit (CaMg[CO₃]₂), Kaolinit (Al₄[(OH)₈|Si₄O₁₀]) oder Wollastonit (Ca₃[Si₃O₉]) sind.

beispielsweise andere für Polycarbonatformmassen übliche Füllstoffe, andere Thermoplaste, beispielsweise Acrylnitril-Butadien-Styrol-Copolymere, oder andere Additive wie UV-Stabilisatoren, IR-Stabilisatoren, Thermostabilisatoren, Antistatika, Farbstoffe und Pigmente in den üblichen Mengen zugesetzt werden; gegebenenfalls können das Entformungsverhalten, das Fließverhalten, und/oder die Flammwidrigkeit noch durch Zusatz externer Entformungsmittel, Fließmittel, und/oder Flammschutzmittel verbessert werden (z. B. Alkyl- und Arylphosphite, - phosphate, -phosphane, -niedermolekulare Carbonsäureester, Halogenverbindungen, Salze, Kreide, Quarzmehl, Glas- und Kohlenstofffasern, Pigmente und deren Kombination. Solche Verbindungen werden z. B. in WO 99/55772, S. 15-25, und in "Plastics Additives", R. Gächter und H. Müller, Hanser Publishers 1983, beschrieben).

Geeignete Additive sind beispielsweise beschrieben in "Additives for Plastics Handbook, John Murphy, Elsevier, Oxford 1999 ", im "Plastics Additives Handbook, Hans Zweifel, Hanser, München 2001".

Geeignete Antioxidantien bzw. Thermostabilisatoren sind beispielsweise:
Alkylierte Monophenole, Alkylthiomethylphenole, Hydrochinone und alkylierte Hydrochinone, Tocopherole, Hydroxylierte Thiodiphenylether, Alkylidenbisphenole, O-, N- und S-Benzylverbindungen, Hydroxybenzylierte Malonate, Aromatische Hydroxybenzylverbindungen, Triazinverbindungen, Acylaminophenole, Ester von β-(3,5-Di-tert-butyl-4-hydroxyphenyl)propionsäure, Ester von β-(5-tert-Butyl-4-hydroxy-3-methylphenyl)propionsäure, Ester von β-(3,5-Dicyclohexyl-4-hydroxyphenyl)propionsäure, Ester von 3,5-Di-tert-butyl-4-hydroxyphenylessigsäure, Amide der β-(3,5-Di-tert-butyl-4-hydroxyphenyl)propionsäure, geeignete Thiosynergisten, sekundäre Antioxidantien, Phosphite und Phosphonite, Benzofuranone und Indolinone.

Bevorzugt sind organische Phosphite, Phosphonate und Phosphane, meist solche bei denen die organischen Reste völlig oder teilweise aus gegebenenfalls substituierten aromatischen Resten bestehen.

Als Komplexierungsmittel für Schwermetalle und zur Neutralisation von Alkalispuren sind o/m Phosphorsäuren, ganz oder teilweise veresterte Phosphate oder Phosphite geeignet.

Als Lichtschutzmittel (UV-Absorber) sind geeignet 2-(2'-Hydroxyphenyl)benzotriazole, 2-Hydroxybenzophenone, Ester von substituierten und unsubstituierten Benzoesäuren, Acrylate, sterisch gehinderte Amine, Oxamide sowie 2-(Hydroxyphenyl)-1,3,5-triazine bzw substituierte Hydroxyalkoxyphenyl, 1,3,5-triazole, bevorzugt sind substituierte Benzotriazole wie z. B. 2-(2'-hydroxy-5'-methyl-phenyl)-benzotriazol, 2-(2'-hydroxy-3',5'-di-t-butyl-phenyl)benzotriazol, 2-(2'-hydroxy-3'-tert.-butyl-5'-methyl-phenyl)-5-chlorobenzotriazol, 2-(2'-hydroxy-3',5'-tert.-butylphenyl)-5-chlorobenzotriazol, 2-(2'-hydroxy-5'-tert.-octylphenyl)benzotriazol, 2-(2'-hydroxy-3',5'-di-tert.-amylphenyl)benzotriazol, 2-[2'-hydroxy-3'-(3",4",5",6"-tetrahydrophthalimido-ehyl)-5'-methylphenyl]-benzotriazol und 2,2'-methylenebis[4-(1,1,3,3-tetramethylbutyl)-6-(2H-benzotriazol-2-yl)phenol].

Polypropylenglykole allein oder in Kombination mit z. B. Sulfonen oder Sulfonamiden als Stabilisatoren können gegen die Schädigung durch Gamma-Strahlen verwendet werden.

Diese und andere Stabilisatoren können einzeln oder in Kombinationen verwendet werden und in den genannten Formen dem Polycarbonat zugesetzt werden.

Außerdem können Verarbeitungshilfsmittel wie Entformungsmittel, meist Derivate langkettiger Fettsäuren, zugesetzt werden. Bevorzugt sind z. B. Pentaerythrittetrastearat und Glycerinmonostearat. Sie werden allein oder im Gemisch eingesetzt.

Geeignete flammhemmende Additive sind Phosphatester, d. h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

Des weiteren können Farbmittel, wie organische Farbstoffe oder Pigmente oder anorganische Pigmente, IR-Absorber, einzeln, im Gemisch oder auch in Kombination mit Stabilisatoren, Glasfasern, Glas(hohl)kugeln, anorganischen, insbesondere mineralischen, Füllstoffen zugesetzt werden.

Die erfindungsgemäße Polycarbonatformmasse, gegebenenfalls in Abmischung mit anderen Thermoplasten und/oder üblichen Additiven, kann überall dort eingesetzt werden, wo bereits bekannte Polycarbonatformmassen eingesetzt werden.

Ein Mehrwellenextruder mit zueinander ringförmig angeordneten Schneckenwellen, weist 8 bis 16, meist 10 oder 12 gleichsinnig drehende Schneckenwellen auf. Die Schneckenwellen sind mit Schneckenelementen besetzt, die jeweils gegenüber den jeweils unmittelbar benachbarten Schneckenelementen der jeweils unmittelbar benachbarten Schneckenwellen bevorzugt dicht kämmend sind. Die Schneckenwellen sind dabei ringförmig um einen inneren Kern mit einer den mit den Schneckenelementen besetzten Schneckenwellen angepasster Kontur angeordnet. Jede Schneckenwelle ist dabei zwei anderen Schneckenwellen unmittelbar benachbart. Nach Außen sind diese Schneckenwellen umfasst von einem äußeren Gehäuse, dessen innere Kontur ebenfalls den Schneckenwellen angepasst ist. Das Gehäuse und/oder der Kern des Mehrwellenextruders mit zueinander ringförmig angeordneten Schneckenwellen können sowohl beheizbar als auch kühlbar ausgeführt sein.

Im Sinne der vorliegenden Erfindung wird ein solcher Mehrwellenextruder mit zueinander ringförmig angeordneten Schneckenwellen nachfolgend auch Ringextruder genannt.

Die Schneckenelemente eines Ringextruders unterscheiden sich nicht von denen eines Doppelschneckenextruders, der vor die gleiche verfahrenstechnische Aufgabe gestellt wird. Auch unterscheiden sich die Verfahrenszonen eines Ringextruders nicht von denen eines Doppelschneckenextruders, der vor die gleiche verfahrenstechnische Aufgabe gestellt wird.

Der Außendurchmessers eines dichtkämmenden Schneckenelements, wird auch als DA bezeichnet. Der Kernradius eines solchen Schneckenelements wird als DI bezeichnet.

Im Sinne der vorliegenden Erfindung ist das L/D-Verhältnis der Quotient aus der Länge des Abschnitts der Schneckenwelle, der mit Schneckenelementen besetzt ist, und dem Außendurchmesser eines dichtkämmenden Schneckenelements, das die Innenwand des Extruders abreinigt.

Ringextruder an und für sich sind beispielsweise bekannt aus:
DE4412725A1, DE4412741A1, DE19622582A1, DE202007004997U1, DE202007005010U1, WO03020493A1 und WO2006045412A2 sowie aus der Veröffentlichung "Compoundieren mit zwölf Wellen" Carl Hanser Verlag, München, KU Kunststoffe, Jahrgang 90 (2000) 8, Seiten 60 bis 62.

Auch ist es bekannt, dass Ringextruder die Produktqualität verbessern und eine gute Dispergierleistung erbringen.

Jedoch ist nirgendwo im Stand der Technik offenbart, dass es mit einem Ringextruder möglich ist, eine Polycarbonatformmasse enthaltend einen Verstärkungsfüllstoff herzustellen, die verbesserte Eigenschaften aufweist. Insbesondere ist im Stand der Technik nirgendwo ein Verfahren zur Herstellung einer Polycarbonatformmasse enthaltend einen Verstärkungsfüllstoff offenbart, bevorzugt ausgewählt aus ein oder mehreren Mitgliedern der Gruppe umfassend die Mitglieder Titandioxid (TiO₂), Talkum (Mg₃Si₄O₁₀(OH)₂), Dolomit (CaMg[CO₃]₂), Kaolinit (Al₄[(OH)₈|Si₄O₁₀]) und Wollastonit (Ca₃[Si₃O₉]), bevorzugt ausgewählt aus ein oder mehreren Mitgliedern der Gruppe umfassend die Mitglieder Titandioxid (TiO₂) und Talkum (Mg₃Si₄O₁₀(OH)₂), wobei der Gehalt an Verstärkungsfüllstoff 3 bis 45 Gew.-%, jeweils bezogen auf die Gesamtmasse der Polycarbonatformmasse.

Bevorzugt beträgt der Gehalt an Verstärkerfüllstoff 10 bis 35 Gew.-%, besonders bevorzugt 12 bis 32 Gew.-%, ganz besonders bevorzugt 15 bis 30 Gew.-%, jeweils bezogen auf die Gesamtmasse der Formmasse. Insbesondere gelten diese Werte für Titandioxid (TiO₂) als Verstärkerfüllstoff, jedoch auch für andere Verstärkerfüllstoff wie Talkum (Mg₃Si₄O₁₀(OH)₂), Dolomit (CaMg[CO₃]₂), Kaolinit (Al₄[(OH)₈|Si₄O₁₀]) und Wollastonit (Ca₃[Si₃O₉]) sind diese Werte gültig.

Alternativ bevorzugt beträgt der Gehalt an Verstärkungsfüllstoff 15 bis 45 Gew.-%, besonders bevorzugt 25 bis 40 Gew.-%, ganz besonders bevorzugt 30 bis 35 Gew.-%jeweils bezogen auf die Gesamtmasse der Formmasse. Insbesondere gelten diese Werte für Talkum (Mg₃Si₄O₁₀(OH)₂) als Verstärkerfüllstoff, jedoch auch für andere Verstärkerfüllstoff wie Titandioxid (TiO₂), Dolomit (CaMg[CO₃]₂), Kaolinit (Al₄[(OH)₈|Si₄O₁₀]) und Wollastonit (Ca₃[Si₃O₉]) sind diese Werte gültig.

Eine solche erfindungsgemäß hergestellte Polycarbonatformmasse weist bessere Eigenschaften auf als Polycarbonatformmassen, die als Polycarbonatformmassen, die mit Verfahren nach dem Stand der Technik hergestellt wurden, wobei die Polycarbonatformmassen, die nach dem Stand der Technik hergestellt wurden, die gleichen Bestandteile in denselben Anteilen aufweisen, wie die erfindungsgemäß hergestellte Polycarbonatformmasse.

Erfindungsgemäß bevorzugt wird ein Ringextruder mit 10 oder 12 Schneckenwellen eingesetzt, besonders bevorzugt wird ein Ringextruder mit 12 Schneckenwellen eingesetzt.

Weiter erfindungsgemäß bevorzugt weist der Ringextruder ein L/D-Verhältnis von 28 bis 45 auf, besonders bevorzugt von 33 bis 42.

Weiter erfindungsgemäß bevorzugt weist der Ringextruder ein DA/DI-Verhältnis von 1,5 bis 1,8 auf, besonders bevorzugt von 1,55 bis 1,74.

Weiter erfindungsgemäß bevorzugt weist der Ringextruder eine Drehmomentdichte von 2 bis 10 Nm/cm³, bevorzugt von 4 bis 8 Nm/cm³, besonders bevorzugt von 5,5 bis 6,5 Nm/cm³ auf, wobei die Drehmomentdichte definiert ist als der Quotient aus dem maximalen Drehmoment einer Schneckenwelle geteilt durch die dritte Potenz des Achsabstands zweier benachbarter Schneckenwellen.

Weiter erfindungsgemäß bevorzugt weisen die Schneckenelemente des Ringextruder einen Außendurchmesser DA von 10 bis 100 mm auf.

Weiter erfindungsgemäß bevorzugt weist der Ringextruder eine Gangtiefe, definiert als (DA - DI)/2, von 2 bis 40 mm auf.

Weiter erfindungsgemäß bevorzugt weist der Ringextruder eine freie Querschnittsfläche von 5 bis 1000 cm² auf. Dabei ist die freie Querschnittsfläche die Fläche der Extruderbohrung, die nicht von Schneckenelementen oder Extruderwelle ausgefüllt ist, also die für die Förderung der Polycarbonatformmasse zur Verfügung steht.

Bei dem erfindungsgemäß eingesetzten Ringextruder kann es sich beispielsweise um einen der Ringextruder mit den Bezeichnungen RingExtruder RE® 3 XP, RingExtruder RE® 1 XPV oder RingExtruder RE® 3 XPV der Firma Extricom Extrusion GmbH handeln.

Auch Gegenstand der vorliegenden Erfindung ist eine Formmasse, die nach dem erfindungsgemäßen Verfahren hergestellt wird.

Weiterer Gegenstand der Erfindung ist die Verwendung der erfindungsgemäßen Formmasse zur Herstellung von Reflektoren in Leuchten oder Strukturbauteilen, beispielsweise für den Automobilbau.

Nachfolgend wird die Erfindung anhand von Beispielen erläutert, ohne dass die Erfindung dadurch auf diese Beispiele beschränkt werden soll.

### Beispiele

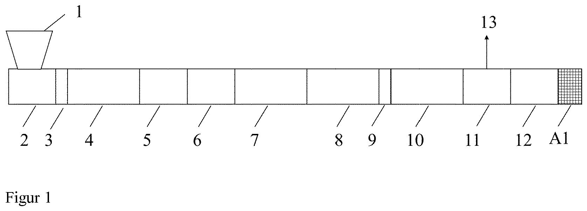

Die in den Beispielen 1-3 beschriebenen Versuche wurden mit einem Doppelschneckenextruder ZE60A UTXi der Firma KraussMaffei Berstorff GmbH durchgeführt. Der verwendete Doppelschneckenextruder besitzt einen Gehäuseinnendurchmesser von 65 mm und ein L/D-Verhältnis von 43. Den prinzipiellen Aufbau des verwendeten Extruders zeigt Figur 1. Der Doppelschneckenextruder weist ein aus 11 Teilen bestehendes Gehäuse auf, in welchem 2 gleichsinnig drehende, miteinander kämmende Wellen (nicht gezeigt) angeordnet sind.

In Beispiel 1 erfolgte die Dosierung aller Bestandteile der Polycarbonatformmasse über den Haupteinzug in Gehäuse 2 über den abgebildeten Einzugstrichter 1. In Gehäuseteil 11 befindet sich die Entgasungsöffnung 13, welche an eine Absaugvorrichtung (nicht gezeigt) angeschlossen ist.

Im Bereich der Gehäuse 2 bis 5 befinden sich Förderzonen für ein Polycarbonatgranulat und ein Titandioxidpulver.

Im Bereich der Gehäuse 6 und 7 befindet sich eine Plastifizierzone, welche aus verschiedenen zwei- und dreigängigen Knetblöcken verschiedener Breite und sowie Zahnblöcken besteht.

Im Bereich der Gehäuse 8 bis 10 befindet sich eine Mischzone, welche aus Knetelementen, Zahnblöcken und Förderelementen besteht.

In Gehäuse 12 befindet sich die Druckaufbauzone gefolgt von einer Schmelzefiltration (Position A1 in Figur 1) (Typ: DSC 176 von Fa. Maag) und im Anschluss daran einer Düsenplatte mit 29 Löchern.

In Beispiel 2 erfolgte die Dosierung des Polycarbonatgranulats über den Haupteinzug in Gehäuse 2 über den abgebildeten Einzugstrichter 1. Das Titandioxidpulver wurden über eine Seitenfüttereinrichtung in Gehäuse 8 zudosiert. In Gehäuseteil 11 befindet sich die Entgasungsöffnung 13, welche an eine Absaugvorrichtung (nicht gezeigt) angeschlossen ist.

Im Bereich der Gehäuse 2 bis 5 befinden sich Förderzonen für das Polycarbonatgranulat.

Im Bereich der Gehäuse 6 und 7 befindet sich eine Plastifizierzone, welche aus verschiedenen zwei- und dreigängigen Knetblöcken verschiedener Breite und sowie Zahnblöcken besteht.

Im Bereich der Gehäuse 9 bis 10 befindet sich eine Mischzone, welche aus Knetelementen, Zahnblöcken und Förderelementen besteht.

In Gehäuse 12 befindet sich die Druckaufbauzone gefolgt von einer Schmelzefiltration (Position A1 in Figur 1) (Typ: DSC 176 von Fa. Maag) und im Anschluss daran einer Düsenplatte mit 29 Löchern.

In Beispiel 3 erfolgte die Dosierung aller Bestandteile der Polycarbonatformmasse über den Haupteinzug in Gehäuse 2 über den abgebildeten Einzugstrichter 1. In Gehäuseteil 11 befindet sich die Entgasungsöffnung 13, welche an eine Absaugvorrichtung (nicht gezeigt) angeschlossen ist.

Im Bereich der Gehäuse 2 bis 7 befinden sich Förderzonen für das Polycarbonatgranulat und das Titandioxidpulver.

Im Bereich des Gehäuses 8 befindet sich eine Plastifizierzone, welche aus verschiedenen zwei- und dreigängigen Knetblöcken verschiedener Breite und sowie Zahnblöcken besteht.

Im Bereich des Gehäuses 10 befindet sich eine Mischzone, welche aus Zahnblöcken besteht.

In Gehäuse 12 befindet sich die Druckaufbauzone gefolgt von einer Schmelzefiltration (Position A1 in Figur 1) (Typ: DSC 176 von Fa. Maag) und im Anschluss daran einer Düsenplatte mit 29 Löchern.

In den Beispielen 1 und 3 wurden Polycarbonatgranulat und Titandioxidpulver mittels handelsüblicher gravimetrischer Differentialdosierwaagen in den Einzugstrichter 1 dosiert.

In Beispiel 2 wurde das Polycarbonatgranulat mittels einer handelsüblichen gravimetrischen Differentialdosierwaage in den Einzugstrichter 1 dosiert. Das Titandioxidpulver wurde mittels einer handelsüblichen gravimetrischen Differentialdosierwaage über eine Seitenfütterungeinrichtung in Gehäuse 8 dosiert.

Die Granulierung erfolgte in den Beispielen 1 bis 3 als Stranggranulierung nach Wasserbadkühlung.

Die Messung der Schmelzetemperatur erfolgte in den Beispielen 1 bis 3 mittels Einstechen eines Thermoelements in die austretende Schmelze des mittleren Schmelzestrangs direkt vor der Düse.

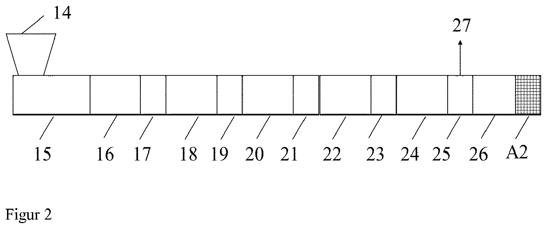

Der in Beispiel 4 beschriebene Versuch (erfindungsgemäß) wurde mit einem Mehrwellenextruder vom Typ Ringextruder RE 3XP der Firma Extricom GmbH durchgeführt. Der verwendete Mehrwellenextruder besitzt 12 Wellen mit einem Schneckenaußendurchmesser von jeweils 30 mm, ein DA/DI-Verhältnis von 1,55 und ein L/ D-Verhältnis von 39. Den prinzipiellen Aufbau des verwendeten Extruders zeigt Figur 2. Der Mehrwellenextruder weist ein aus 12 Teilen bestehendes Gehäuse auf, in welchem 12 gleichsinnig drehende, miteinander kämmende Wellen (nicht gezeigt) angeordnet sind.

Die Dosierung aller Bestandteile der Polycarbonatformmasse erfolgte über den Haupteinzug in Gehäuse 15 in den abgebildeten Einzugstrichter 14. In Gehäuseteil 25 befindet sich die Entgasungsöffnung 27, welche an eine Absaugvorrichtung (nicht gezeigt) angeschlossen ist.

Im Bereich der Gehäuse 15 bis 19 befinden sich Förderzonen für das Polycarbonatgranulat und das Titandioxidpulver.

Im Bereich des Gehäuses 20 befindet sich eine Plastifizierzone, welche aus verschiedenen zweigängigen Knetblöcken verschiedener Breite und Zahnmischelementen besteht.

Im Bereich der Gehäuse 22 bis 24 befindet sich eine Mischzone, welche aus verschiedenen Förder- und Mischelementen besteht.

In Gehäuse 26 befindet sich die Druckaufbauzone gefolgt von einer Schmelzefiltration (Position A2 in Figur 2) (Typ K-SWE-121 von Fa. Kreyenborg) und im Anschluss daran einer Düsenplatte mit 24 Löchern.

In Beispiel 4 wurden Polycarbonatgranulat und Titandioxidpulver mittels handelsüblicher gravimetrischer Differentialdosierwaagen in den Einzugstrichter 14 dosiert.

Die Granulierung erfolgte als Stranggranulierung nach Wasserbadkühlung.

Die Messung der Schmelzetemperatur erfolgte mittels Einstechen eines Thermoelements in die austretende Schmelze in einem der beiden mittleren Schmelzestränge direkt vor der Düse.

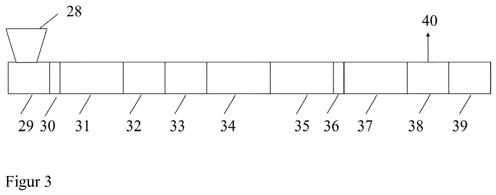

Der in Beispiel 5 beschriebene Versuch wurde mit einem Doppelschneckenextruder ZE60A UTXi der Firma KraussMaffei Berstorff GmbH durchgeführt. Der verwendete Doppelschneckenextruder besitzt einen Gehäuseinnendurchmesser von 65 mm und ein L/ D-Verhältnis von 43. Den prinzipiellen Aufbau des verwendeten Extruders zeigt Figur 3. Der Doppelschneckenextruder weist ein aus 11 Teilen bestehendes Gehäuse auf, in welchem 2 gleichsinnig drehende, miteinander kämmende Wellen (nicht gezeigt) angeordnet sind.

In Beispiel 5 erfolgte die Dosierung aller Bestandteile der Polycarbonatformmasse über den Haupteinzug in Gehäuse 29 über den abgebildeten Einzugstrichter 28. In Gehäuseteil 38 befindet sich die Entgasungsöffnung 40, welche an eine Absaugvorrichtung (nicht gezeigt) angeschlossen ist.

Im Bereich der Gehäuse 30 bis 32 befinden sich Förderzonen für das Polycarbonatgranulat und das Titandioxidpulver.

Im Bereich des Gehäuses 33 befindet sich eine Plastifizierzone, welche aus verschiedenen zwei- und dreigängigen Knetblöcken verschiedener Breite und sowie Zahnblöcken besteht.

Im Bereich der Gehäuse 35 bis 37 befindet sich eine Mischzone, welche aus Knetelementen, Zahnblöcken und Förderelementen besteht.

In Gehäuse 39 befindet sich die Druckaufbauzone und im Anschluss daran einer Düsenplatte mit 29 Löchern.

In Beispiel 5 wurde Polycarbonatgranulat und Titandioxidpulver mittels handelsüblicher gravimetrischer Differentialdosierwaagen in den Einzugstrichter 28 dosiert.

Die Granulierung erfolgte als Stranggranulierung nach Wasserbadkühlung.

Die Messung der Schmelzetemperatur erfolgte in den Beispiel 5 mittels Einstechen eines Thermoelements in die austretende Schmelze des mittleren Schmelzestrangs direkt vor der Düse.

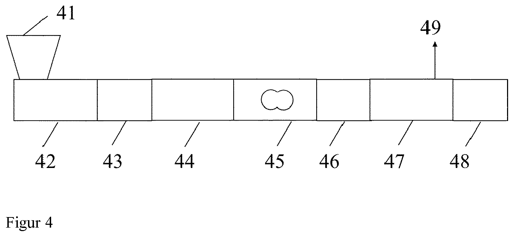

Der in den Beispielen 6 bis 8 beschriebenen Versuche (erfindungsgemäß) wurden mit einem Mehrwellenextruder vom Typ Ringextruder RE 1XPV der Firma Extricom GmbH durchgeführt. Der verwendete Mehrwellenextruder besitzt 12 Wellen mit einem Schneckenaußendurchmesser von jeweils 18.7 mm, ein DA/DI-Verhältnis von 1,74 und ein L/D-Verhältnis von 35. Den prinzipiellen Aufbau des verwendeten Extruders zeigt Figur 4. Der Mehrwellenextruder weist ein aus 7 Teilen bestehendes Gehäuse auf, in welchem 12 gleichsinnig drehende, miteinander kämmende Wellen (nicht gezeigt) angeordnet sind.

In den Beispielen 6 bis 8 erfolgte die Dosierung des Polycarbonatranulats über den Haupteinzug in Gehäuse 42 über den abgebildeten Einzugstrichter 41. Das Titandioxidpulver wurde über eine Seitenfüttereinrichtung in Gehäuse 45 zudosiert. In Gehäuseteil 47 befindet sich die Entgasungsöffnung 49, welche an eine Absaugvorrichtung (nicht gezeigt) angeschlossen ist.

Im Bereich des Gehäuses 43 befindet sich eine Förderzone für das Polycarbonatgranulat.

Im Bereich des Gehäuses 44 befindet sich eine Plastifizierzone, welche aus verschiedenen zweigängigen Knetblöcken verschiedener Breite besteht.

Im Bereich der Gehäuse 45 bis 47 befinden sich Mischzonen, welche aus Knetelementen, Zahnblöcken und Förderelementen besteht.

In Gehäuse 48 befindet sich die Druckaufbauzone und im Anschluss daran einer Düsenplatte mit 7 Löchern.

In den Beispielen 6 bis 8 wurde das Polycarbonatgranulat mittels einer handelsüblichen gravimetrischen Differentialdosierwaage in den Einzugstrichter 41 dosiert. Das Titandioxidpulver wurde mittels einer handelsüblichen gravimetrischen Differentialdosierwaage über eine Seitenfütterungeinrichtung in Gehäuse 45 dosiert.

Die Granulierung erfolgte als Stranggranulierung nach Wasserbadkühlung.

Die Messung der Schmelzetemperatur erfolgte mittels Einstechen eines Thermoelements in die austretende Schmelze in den mittleren Schmelzestrang direkt vor der Düse.

Zur Bewertung der Dispergiergüte des Titandioxidpulvers bei den Beispielen 1 bis 4 wurde der Druck vor dem Schmelzesieb mittels eines eingebauten Drucksensors jeweils zu Beginn des Versuchs, nach dem Erreichen eines konstanten Drehmomentes, und nach 60 Minuten gemessen. Der Druckanstieg wie in Tabelle 1 dargestellt wurde wie folgt berechnet:
Druckanstieg [in bar/min] = (Druck nach 60 Minuten minus Druck am Versuchsbeginn) geteilt durch 60 min.

Die in den Beispielen 5 bis 8 hergestellte Polycarbonatzusammensetzung wurde im Anschluss über ein Spritzgussverfahren zu Prüfkörpern mit einer Länge und Breite von jeweils 60 mm und einer Dicke von 2 mm verarbeitet.

Die Spritzgussverarbeitung erfolgte unter folgenden für Polycarbonate charakteristischen Prozessbedingungen: Massetemperatur: 310°C, Werkzeugtemperatur: 90°C. Vor der Spritzgussverarbeitung wurden die Granulate der Polycarbonatformmasse bei 110 °C innerhalb von 4 Stunden vorgetrocknet.

Die Prüfung der Durchstoßkraft und-verformung an den spritzgegossenen Prüfkörpern der Beispiele 5 bis 8 erfolgte nach DIN EN ISO 6603-2:2000 bei 23 °C. Es wurden jeweils 10 Prüfkörper geprüft und aus diesen Ergebnissen der arithmetische Mittelwert bestimmt.

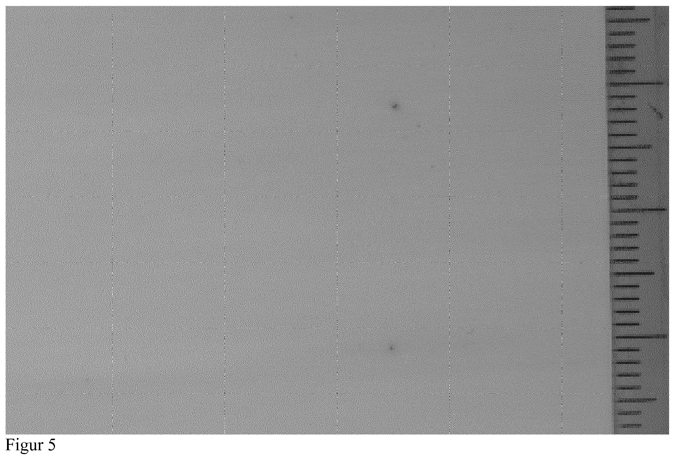

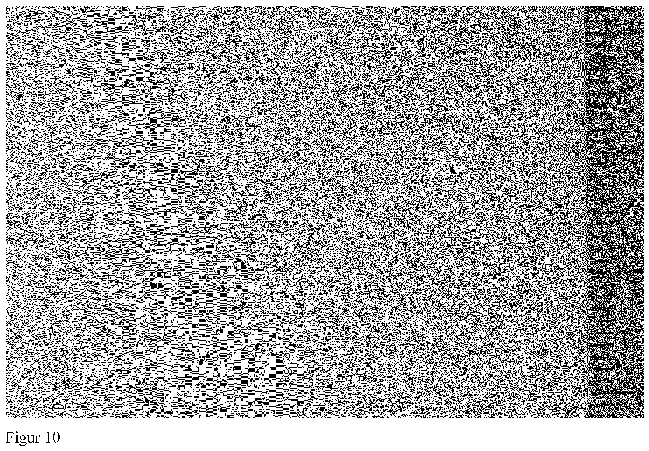

Zu allen Beispielen wurde die Dispergiergüte des Titandioxidpulvers mittels visueller Bewertung von extrudierten Folien bestimmt. Dazu wurden aus den hergestellten Granulaten der Polycarbonatformmasse mittels einer Folienextrusionsanlage, im Wesentlichen bestehend aus einem Einschneckenextruder mit anschließendem Walzwerk, 150 µm dicke Folien hergestellt. Diese Folien wurden anschließend auf einem handelsüblichen Leuchttisch im Durchlicht mit aufgelegtem Maßstab mit einer Kamera fotografiert. Die Fotos (siehe Figuren 5 bis 12) wurden anschließend visuell beurteilt und in die Güteklassen 1 (hervorragend) bis 6 (schlecht) eingeteilt (vergleiche Tabelle 2). Für alle Figuren 5 bis 12 gilt: Maßstab: 1 Teilstrich entspricht 1 mm; unvollständig dispergierte Titandioxidpartikel sind als dunkle Stellen im Bild zu erkennen.

Die Formmasse, die in den jeweiligen Extruder geführt wird, besteht bei den Beispielen 1 bis 6 aus einer Mischung aus:
- 85 Gew.-% eines Granulats eines linearen Polycarbonats auf Basis von Bisphenol A mit einer relativen Viskosität ηᵣₑₗ = 1,32 (gemessen in CH₂Cl₂ als Lösungsmittel bei 25°C und bei einer Konzentration von 0,5 g/100 ml) und
- 15 Gew.-% eines Titandioxidpulvers (Typ KRONOS 2230 der Fa. Kronos Titan).

Die Formmasse, die in den Extruder geführt wird, besteht bei Beispiel 7 aus einer Mischung aus:
- 80 Gew.-% eines linearen Polycarbonats auf Basis von Bisphenol A mit einer relativen Viskosität ηᵣₑₗ = 1,32 (gemessen in CH₂Cl₂ als Lösungsmittel bei 25°C und bei einer Konzentration von 0,5 g/100 ml) und
- 20 Gew.-% eines Titandioxidpulvers (Typ KRONOS 2230 der Fa. Kronos Titan).

Die Formmasse, die in den Extruder geführt wird, besteht bei Beispiel 8 aus einer Mischung aus:
- 70 Gew.-% eines linearen Polycarbonats auf Basis von Bisphenol A mit einer relativen Viskosität ηᵣₑₗ = 1,32 (gemessen in CH₂Cl₂ als Lösungsmittel bei 25°C und bei einer Konzentration von 0,5 g/100 ml) und
- 30 Gew.-% eines Titandioxidpulvers (Typ KRONOS 2230 der Fa. Kronos Titan).

### Vergleichsbeispiele 1 bis 3

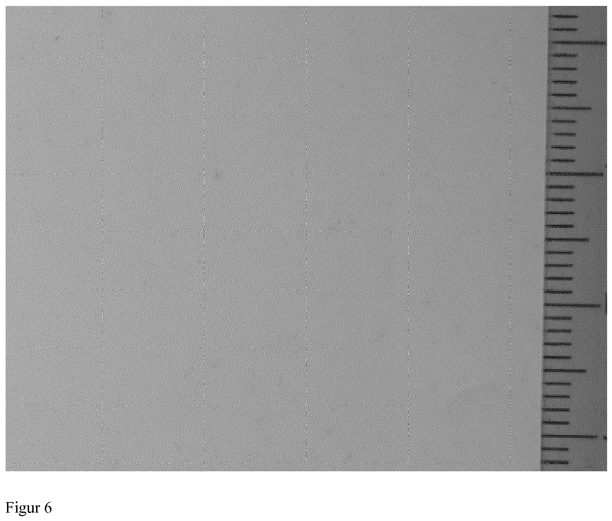

Die Vergleichsbeispiele 1 und 3 unterscheiden sich in der Drehzahl des Extruders. Während in Beispiel 1 die Extruderdrehzahl 300 1/min beträgt, ist sie in Beispiel 3 doppelt so hoch bei gleichem Durchsatz von 580 kg/h. Die Erhöhung der Drehzahl führt zwar zu einer deutlich besseren Dispergierung, wie man an dem deutlich niedrigeren Druckanstieg vor dem Schmelzesieb (siehe Tabelle 1) und der geringeren Anzahl nicht dispergierter Titandioxidpartikel (siehe Figur 5 (Beispiel 1), im Vergleich zu Figur 6 (Beispiel 2)) erkennen kann. Allerdings steigt die Schmelzetemperatur bei der höheren Drehzahl in Beispiel 3 gleichzeitig um 34 °C an, was in für den Fachmann bekannter Weise Polymerabbau begünstigt.

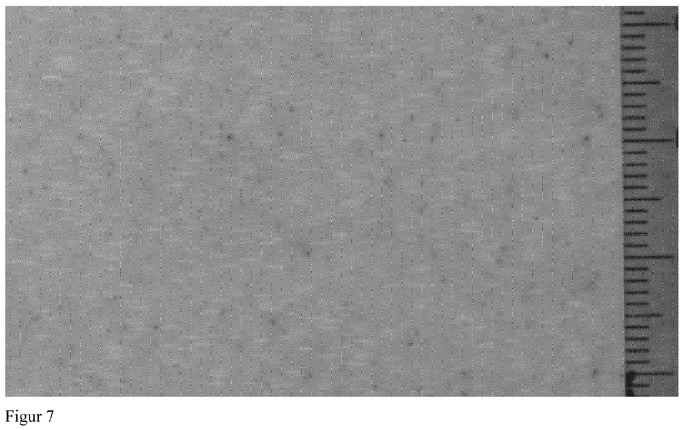

Die Vergleichsbeispiele 1 und 2 unterscheiden sich nur in der Dosierstelle des Titandioxidpulvers. Während in Beispiel 1 das Titandioxidpulver in den Einzugstrichter 1 zugegeben wurde, erfolgte die Zugabe in Beispiel 2 nach der Aufschmelzung über eine Seitenfüttereinrichtung in Gehäuse 8 in die Polycarbonatschmelze. Wie in Tabelle 1 zu erkennen ist, führt die Zugabe des Titandioxidpulvers nach der Aufschmelzung in Beispiel 2 zu einem deutlich höheren Druckanstieg vor dem Schmelzesieb, welches ein Anzeichen für eine schlechtere Dispergierung ist, wie auch Figur 7 bestätigt, welche eine große Anzahl sehr schlecht dispergierter Titandioxidpartikel zeigt. Im Vergleich dazu ist in Figur 5 (Beispiel 1) die Anzahl großer Titandioxidpartikel deutlich geringer.

### Beispiel 4 (erfindungsgemäß)

Ziel des erfindungsgemäßen Beispiels 4 war es, eine mindestens vergleichbare Titandioxiddispergierung wie in Vergleichsbeispiel 3 zu erreichen bei allerdings deutlich niedrigerer Schmelzetemperatur. Dazu wurde ein Aufbau sowie ein Durchsatz und eine Drehzahl des erfindungsgemäßen Verfahrens gewählt, welche zu einem vergleichbaren Druckanstieg vor dem Schmelzesieb führten wie bei Vergleichsbeispiel 3. Sowohl bei den Beispielen 1 und 3 als auch bei Beispiel 4 wurde das Titandioxid jeweils über den Einzugstrichter 1 bzw. 14 in den Extruder zugegeben.

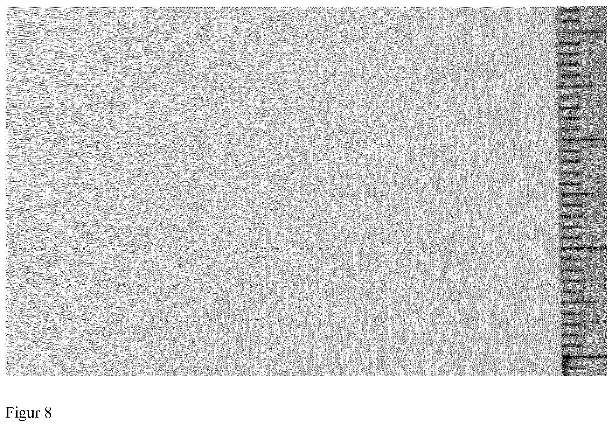

Der Vergleich des erfindungsgemäßen Beispiels 4 mit den nicht erfindungsgemäßen Vergleichsbeispielen 1 und 3 zeigt, dass mit dem erfindungsgemäßen Verfahren eine deutlich bessere Dispergierung der Titandioxidpartikel bei gleichzeitig niedriger Schmelzetemperatur erreicht werden konnte. Erkennbar ist dies einerseits daran, dass der Druckanstieg in Beispiel 4 genauso hoch ist wie in Beispiel 3, jedoch die Schmelzetemperatur um 35 °C niedriger ist (siehe Tabelle 1). Andererseits ist in Figur 8 zu erkennen, dass die Anzahl schlecht dispergierter Titandioxidpartikel vergleichbar zu Beispiel 3 (Figur 6) ist, aber geringer als in Beispiel 1 (Figur 5).

### Vergleichsbeispiel 5

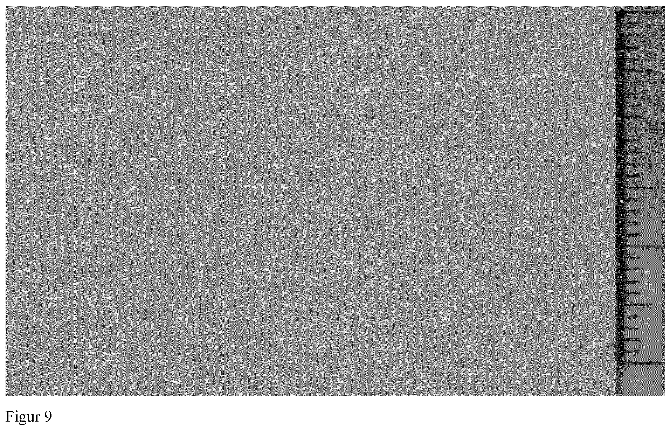

Im Vergleichsbeispiel 5 wurde das Titandioxidpulver über den Einzugstrichter 28 in einen gleichläufigen Doppelschneckenextruder zugegeben. Die Bestimmung der Dispergiergüte des Titandioxids erfolgte über visuelle Bestimmung der Größe und Anzahl der nicht vollständig dispergierten Titandioxidpartikel in einer wie oben beschrieben hergestellten Folie (siehe Figur 9). Zusätzlich wurden die multiaxialen mechanischen Eigenschaften mittels eines wie oben bereits beschriebenen Durchstoßversuchs nach DIN EN ISO 6603-2:2000 bei 23 °C ermittelt.

### Beispiel 6 (erfindungsgemäß)

Beim erfindungsgemäßen Beispiel 6 wurde das Titandioxidpulver in Gehäuse 45 nach der Aufschmelzung des Polycarbonats zugegeben. Diese Verfahrensweise bewirkte beim Vergleichsbeispiel 2, dass die Dispergierung der Titandioxidpartikel wesentlich schlechter war als bei Zugabe in das 1. Extrudergehäuse (siehe Druckanstieg in Tabelle 1 und resultierende Partikelgrößen in Figur 7).

Der Durchstoßversuch an Proben aus dem erfindungsgemäßen Beispiel 6 zeigt ein deutlich höheres mathematisches Produkt aus maximaler Verformung und maximaler Kraft als bei Vergleichsbeispiel 5 (siehe Tabelle 1). Auch die visuelle Bewertung der Folie ergibt eine bessere Dispergierung der Titandioxidpartikel beim erfindungsgemäßen Beispiel 6 im Vergleich zum Beispiel 5. Dies verdeutlicht, dass das erfindungsgemäße Verfahren sogar bei nicht optimaler Zugabe des Titandioxidpulvers, also nach Aufschmelzen des Polycarbonats, zu einer verbesserten Dispergierung der Titandioxidpartikel und besseren mechanischen Eigenschaften führt.

Gleichzeitig wurde beim erfindungsgemäßen Beispiel 6 eine um 44 °C geringere Schmelzetemperatur erzielt als beim Vergleichsbeispiel 5 (siehe Tabelle 1).

### Beispiel 7 (erfindungsgemäß)

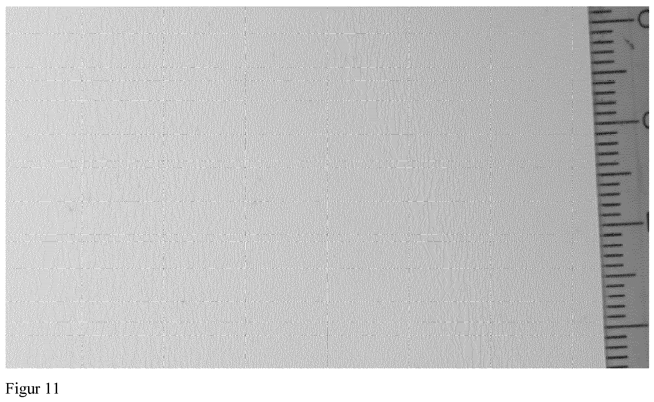

In Beispiel 7 wurden 20 Gew.-% Titandioxidpulver in Gehäuse 45 nach der Aufschmelzung des Polycarbonats zugegeben. Trotz der im Vergleich zum Vergleichsbeispiel 5 nicht optimalen Zugabestelle des Titandioxids und der gleichzeitig höheren Menge an Titandioxid, welche bekanntermaßen zu einer Versprödung der Polycarbonatformasse führt, wurde nur ein geringfügig niedrigeres mathematisches Produkt aus maximaler Verformung und maximaler Kraft als beim Vergleichsbeispiel gemessen (siehe Tabelle 1). Die visuelle Beurteilung der Titandioxidpartikel-Dispergierung anhand der Folien zeigt, dass die Folien aus der erfindungsgemäßen Polycarbonatformmasse aus Beispiel 7 (siehe Figur 11) eine bessere Titandioxid-Dispergierung aufweisen als die Folien aus der Polycarbonatformmasse des Vergleichsbeispiels 5 (siehe Figur 9). Die Schmelzetemperatur ist auch bei dem höheren Titandioxidanteil noch um 42 °C niedriger als beim Vergleichsbeispiel 5 (siehe Tabelle 1).

### Beispiel 8 (erfindungsgemäß)

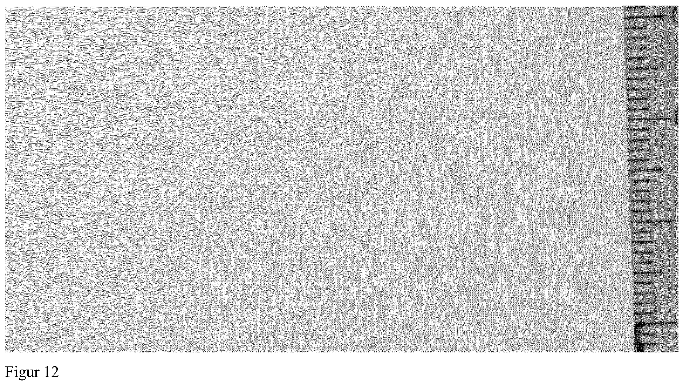

In Beispiel 8 wurden 30 Gew.-% Titandioxidpulver in Gehäuse 45 nach der Aufschmelzung des Polycarbonats zugegeben. Trotz der im Vergleich zum Vergleichsbeispiel 5 nicht optimalen Zugabestelle des Titandioxids und der gleichzeitig höheren Menge an Titandioxid, welche bekanntermaßen zu einer Versprödung der Polycarbonatformmasse führt, wurde nur eine geringere Abnahme des mathematischen Produktes aus maximaler Verformung und maximaler Kraft gefunden als es von vergleichbaren Produkten bekannt ist (siehe Tabelle 1). Die visuelle Beurteilung der Titandioxidpartikel-Dispergierung anhand der Folien zeigt, dass die Folien aus der erfindungsgemäßen Polycarbonatformmasse aus Beispiel 8 (siehe Figur 12) eine etwa gleich gute Titandioxid-Dispergierung aufweisen als die Folien aus der Polycarbonatformmasse des Vergleichsbeispiels 5 (siehe Figur 9). Die Schmelzetemperatur ist auch bei dem doppelten Titandioxidanteil noch um 41 °C niedriger als beim Vergleichsbeispiel 5 (siehe Tabelle 1).

**Tabelle 1**

| Nr | | Gehalt Verstärkerfüllstoff | Durchsatz | Drehzahl | Maschenweite | Siebfläche | Durchsatz/ Siebfläche | Druckanstieg vor Sieb | Schmelzetemperatur | Durchstoßversuch DIN EN ISO 6603-2:2000 bei 23 °C | | | Dispergierg üte (nach Klassifizier ung in Tabelle 2) | Zugehörige Figur |
|---|---|---|---|---|---|---|---|---|---|---|---|---|---|---|
| | | | | | | | | | | max. Kraft | max. Verformung | mathematisches Produkt aus max. Kraft und max. Verformung | | |
| | | Gew.-% | kg/h | 1/min | µm | cm² | kg/(h*cm²) | bar/min | °C | N | mm | N*mm | | |
| 1 | Vergleich | 15 | 580 | 300 | 125 | 430 | 1.35 | 0.2 | 368 | | | | 5 | 5 |
| 2 | Vergleich | 15 | 580 | 300 | 125 | 430 | 1.35 | 0.41 | 368 | | | | 6 | 7 |
| 3 | Vergleich | 15 | 580 | 600 | 125 | 430 | 1.35 | 0.04 | 402 | | | | 4 | 6 |
| 4 | erfindungsgemäß | 15 | 300 | 500 | 120 | 424 | 0.71 | 0.03 | 367 | | | | 3 | 8 |
| 5 | Vergleich | 15 | 690 | 600 | | | | | 386 | 4939 | 16.7 | 82481.3 | 4 | 9 |
| 6 | erfindungsgemäß | 15 | 80 | 600 | | | | | 342 | 5244 | 16.3 | 85477.2 | 2 | 10 |
| 7 | erfindungsgemäß | 20 | 80 | 600 | | | | | 344 | 5177 | 15.7 | 81278.9 | 3 | 11 |
| 8 | erfindungsgemäß | 30 | 80 | 600 | | | | | 345 | 4902 | 14.1 | 69118.2 | 3 | 12 |

**Tabelle 2**

| **Dispergiergüte Klassifizierung** | | | **Agglomerate** | | |
|---|---|---|---|---|---|
| **Klassen** | | | **Groß** | **Mittel** | **Klein** |
| **1** | hervorragend | | keine | keine | keine |
| **2** | gut | | keine | keine | vereinzelt |
| **3** | befriedigend | | keine | vereinzelt | einige |
| **4** | ausreichend | | vereinzelt | vereinzelt | einige |
| **5** | mäßig | | vereinzelt | einige | einige |
| **6** | schlecht | | einige | einige | einige |

## Patentansprüche

1. Verfahren zur Herstellung einer Formmasse enthaltend ein Polycarbonat und einen Verstärkerfüllstoff, wobei die Formmasse in einem Ringextruder compoundiert wird.

2. Verfahren nach Anspruch 1, wobei die Formmasse folgende Bestandteile enthält:
97 bis 50 Gew.-% Polycarbonat,
3 bis 50 Gew.-% Verstärkungsfüllstoff,
0 bis 37 Gew.-% sonstige Bestandteile,
wobei die Summe der Bestandteile 100 Gew.-% beträgt.

3. Verfahren nach Anspruch 1 oder 2, wobei der Verstärkerfüllstoff ausgewählt ist aus ein oder mehreren Mitgliedern der Gruppe umfassend die Mitglieder Titandioxid (TiO₂), Talkum (Mg₃Si₄O₁₀(OH)₂), Dolomit (CaMg[CO₃]₂), Kaolinit (Al₄[(OH)₈|Si₄O₁₀]) und Wollastonit (Ca₃[Si₃O₉]), bevorzugt ausgewählt aus ein oder mehreren Mitgliedern der Gruppe umfassend die Mitglieder Titandioxid (TiO₂) und Talkum (Mg₃Si₄O₁₀(OH)₂).

4. Verfahren nach einem der Ansprüche 1 bis 3, wobei die Formmasse 10 bis 35 Gew.-%, bevorzugt 12 bis 32 Gew.-%, besonders bevorzugt 15 bis 30 Gew.-% Verstärkerfüllstoff enthält.

5. Verfahren nach Anspruch 4, wobei der Verstärkerfüllstoff Titandioxid (TiO₂) ist.

6. Verfahren nach einem der Ansprüche 1 bis 3, wobei die Formmasse 10 bis 40 Gew.-%, bevorzugt 15 bis 35 Gew.-%, besonders bevorzugt 20 bis 30 Gew.-% Verstärkerfüllstoff enthält.

7. Verfahren nach Anspruch 6, wobei der Verstärkerfüllstoff Talkum (Mg₃Si₄O₁₀(OH)₂) ist.

8. Verfahren nach einem der vorhergehenden Ansprüche, wobei die Formmasse 0 bis 20 Gew.-%, bevorzugt 0 bis 10 Gew.-%, sonstige Bestandteile enthält, wobei die Summe der Bestandteile 100 Gew.-% beträgt.

9. Verfahren nach einem der vorhergehenden Ansprüche, wobei das Verfahren folgende Schritte aufweist:
(1) Zugeben von Polycarbonat, Verstärkungsfüllstoff und gegebenenfalls sonstigen Bestandteilen in einen Ringextruder;
(2) Compoundieren von Polycarbonat und Verstärkungsfüllstoff und gegebenenfalls sonstigen Bestandteilen mit dem Ringextruder.

10. Verfahren nach einem der vorhergehenden Ansprüche, wobei die Zugabe des Verstärkerfüllstoffs entweder vor dem Aufschmelzen des Polycarbonats oder nach dem Aufschmelzen des Polycarbonats erfolgt.

11. Verfahren nach einem der vorhergehenden Ansprüche, wobei der Ringextruder ein L/D-Verhältnis von 28 bis 45, besonders bevorzugt von 33 bis 42, aufweist.

12. Verfahren nach einem der vorhergehenden Ansprüche, wobei der Ringextruder ein DA/DI-Verhältnis von 1,5 bis 1,8 auf, bevorzugt von 1,55 bis 1,74, aufweist.

13. Verfahren nach einem der vorhergehenden Ansprüche, wobei der Ringextruder eine Drehmomentdichte von 2 bis 10 Nm/cm³, bevorzugt von 4 bis 8 Nm/cm³, besonders bevorzugt von 5,5 bis 6,5 Nm/cm³, aufweist.

14. Formmasse, hergestellt nach einem Verfahren nach einem der Ansprüche 1 bis 13.

15. Verwendung einer Formmasse nach Anspruch 14 zur Herstellung von Reflektoren in Leuchten oder Strukturbauteilen.
